# EUROPEAN PATENT APPLICATION

(11) **EP 2 363 274 A1**
(43) Date of publication of application: **07.09.2011**
(21) Application number: 11154107.4
(22) Date of filing: 11.02.2011
(51) Int. Cl.: B29C 70/54, B29C 70/88, B32B 5/28

(54) **Process for manufacturing a layered composite component**

(30) Priority: 04.03.2010 GB 1003585
(71) Applicant: Rolls-Royce plc, London SW1E 6AT (GB)
(72) Inventor: McMillan, Alison, Uttoxeter, Staffordshire ST14 7BY (GB); Read, Simon, Derby, Derbyshire DE56 1JG (GB)
(74) Representative: Roberts, Nicholas John

(57) **Abstract**

A process for manufacturing a layered composite component comprises introducing a plurality of micro cracks into a predetermined region of the component in order to provide an increase in strength of the component at certain critical regions of high loading within the component. The micro cracks may be introduced using mechanical means, a pre conditioning load, or by manipulation of process parameters, material properties or stacking sequences.

## Description

This invention relates to a process for manufacturing a layered composite component and is particularly, although not exclusively, concerned with processes for increasing the strength of such a component at certain key regions of in service loading. Layered composite components are employed in many applications, for example in gas turbine engines, in which, for example, aerofoil components and casing structures may be made from composite materials.

Layered composite components comprise a resin matrix in which are embedded reinforcing layers, commonly in the form of plies of woven, nonwoven or knitted fibres.

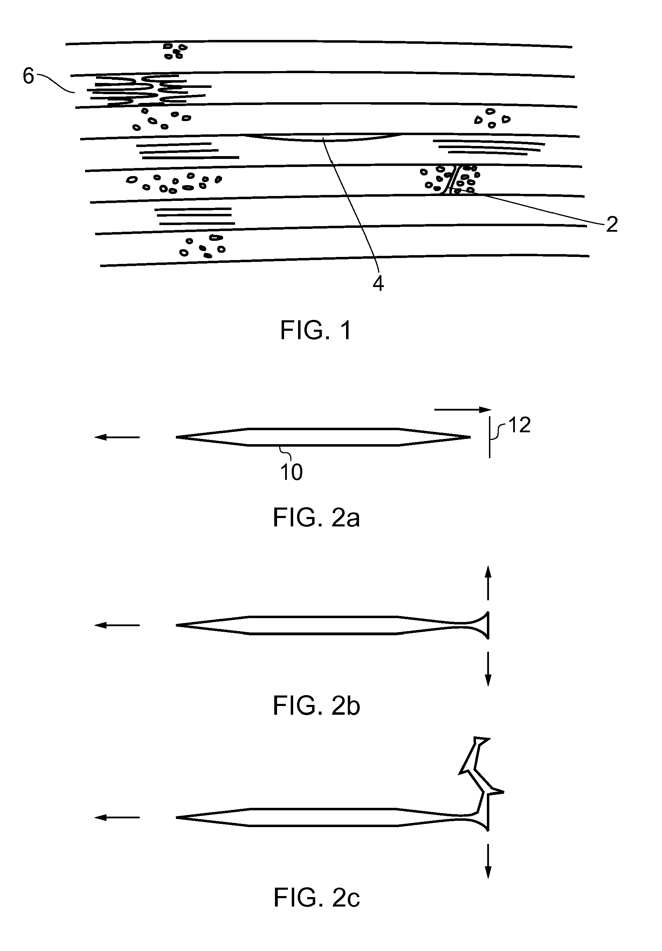

It is known that the strength of layered composite components arises from the ability of the reinforcing fibres in the composite to stop crack propagation. If a crack is running through the thickness of a ply, when it encounters the next ply, the reinforcing fibres will be at a different orientation and will block the crack. Examples of macroscopic crack failures are illustrated in Figure 1, including a through thickness resin failure crack 2, an area of delamination between adjacent plies 4 and fibre tow failure 6. In the aerospace industry, macroscopic crack growth is unacceptable in a composite component. Macroscopic crack growth is not designed for; instead, a rigorous inspection procedure ensures visibly cracked components are removed from service. Test programmes are conducted on components with barely visible cracks to ensure that the cracks do not propagate under service loads.

It is known that any composite component will have a number of microscopic cracks, or micro cracks, distributed through its structure. While cracks of any kind are undesirable, it is generally accepted that a certain number of micro cracks are inevitable, arising, for example as a result of thermal stresses during cooling following the resin cure process. Micro cracks arising in this manner are well distributed throughout the component. It is known that micro cracks can act as arresters of macroscopic crack propagation. However, the scatter in their distribution throughout a component ensures that this aspect of their behaviour cannot be specifically designed for. The overall effect of distributed micro cracks is captured in materials testing work and the detail of their behaviour is ignored.

In general, micro cracks are flaws which are invisible to the naked eye, whereas macroscopic cracks, once initiated, quickly become visible.
According to the present invention, there is provided a process for manufacturing a layered composite component which comprises at least one ply of reinforcing fibres embedded in a resin matrix, the process comprising introducing a plurality of micro cracks into the resin matrix into a predetermined region of the component.

As indicated above, micro cracks are inevitably created in conventional composite lay-up techniques, despite efforts to avoid them. In the context of the present invention, expressions such as "introducing a plurality of micro cracks" are to be interpreted as meaning that deliberate measures are taken during manufacture of the component to ensure that micro cracks are present in the predetermined region. In some embodiments in accordance with the present invention, the predetermined region may comprise the entire component, but more usually the region will be a localised region of the component, for example a region subjected to greater loading or stress than other regions of the component.

By concentrating the micro cracks in a region, the effectiveness of the micro cracks in arresting macroscopic crack propagation is greatly increased, thus providing a measurable increase in component strength in the region.

The region may be a localised region of the component that is subjected to heavy loading when in use. In this manner, the strength increase is concentrated in the region or feature of a component in which it is most needed. A moderate increase in material strength in such a critical region produces a significant improvement in overall component performance.

The region may comprise internal component features that act as macroscopic crack initiators, thus concentrating the micro cracks in the region of the component where macroscopic cracks are most likely to occur.

Introducing the plurality of micro cracks may comprise determining a direction of a selected loading to which the component will be subjected when in use is determined and orienting the micro cracks to extend perpendicular to the direction of the loading to which the component will be subjected when in use. Orienting the micro cracks in this manner ensures that the micro cracks will extend perpendicular to the likely direction of macroscopic crack propagation. The micro cracks are thus best positioned to arrest the propagation of macroscopic cracks, providing the maximum possible increase in local strength.

The layered composite component may comprise at least one ply of reinforcing fibres embedded in a resin matrix. The micro cracks may be introduced into the resin matrix.

The component may comprise at least one drop off and at least some of the plurality of micro cracks may be introduced at the drop off location. Drop offs are likely sites for macroscopic crack initiation and a concentration of micro cracks at such a location can thus provide considerable increase in overall component strength.

The plurality of micro cracks may be introduced by a mechanical process selected from the group comprising impacting, hole drilling, application of high amplitude vibrations, thermal cycling and localised static crushing. Such mechanical damage would normally be expected to weaken a component. However, through appropriate manipulation of impact force and other parameters, it is possible to achieve useful levels of localised micro cracking that increase the strength of the component in the region.

The plurality of micro cracks may be introduced through the application of a preconditioning load. Although generally considered to have only limited benefit in the field of composite components, correct application of pre conditioning loads can produce useful localised micro cracking. The preconditioning load may be applied in a direction perpendicular to the direction of the loading to which the component will be subjected when in use, thus ensuring that the micro cracks are oriented to provide the greatest possible increase in strength.

The plurality of micro cracks may be introduced through manipulation of a manufacturing process parameter selected from the group comprising cure temperature, cure time, cooling time, thermal conductivity of mould tooling, active cooling of mould tooling and application of load during curing.

The plurality of micro cracks may be introduced through selection of material properties for adjacent plies. Selection of individual plies to have higher or lower modulus than surrounding materials can be used to promote micro cracking in preferential layers and orientations.

The plurality of micro cracks may be introduced by blocking several plies having the same material and fibre orientation together in a stacking sequence. Normally considered an undesirable design feature, blocking within a stack sequence can encourage preferential micro cracking in certain layers.

According to another aspect of the present invention, there is provided a layered composite component comprising a plurality of micro cracks in a predetermined region of the component.

The micro cracks may act to arrest crack propagation when the component is in use, thus increasing the strength of the component.

The component may be a test piece or a part of a gas turbine engine.

For a better understanding of the present invention, and to show more clearly how it may carried into effect, reference will now be made, by way of example, to the following drawings, in which:-
Figure 1 illustrates examples of macroscopic crack failure.
Figures 2a to 2c illustrate the mechanism by which micro cracks can arrest the propagation of macroscopic cracks
Figure 3 shows damage produced in a composite component by mechanical impact.
Figure 4 illustrates a T joint in a composite component.
Figure 5 illustrates the effects of cure shrinkage in a small section of a single ply of composite.
Figure 6a illustrates the application of pre conditioning loads to a small section of a single ply of composite.
Figure 6b shows a micro crack generated in the ply of Figure 6a.
Figure 7 illustrates a stacking sequence in a composite component.
Figure 8 shows a tapered component having a plurality of drop offs.
Figure 9a illustrates a part of an axi-symmetric component having a thick region.
Figure 9b is an enlargement of region B of Figure 9a.
Figure 10a shows a blade root configuration for an aerofoil component.
Figure 10b is an enlargement of region B of Figure 10a.

Figures 2a to 2c illustrate the mechanism by which micro cracks can arrest the propagation of macroscopic cracks. Under cyclic loading, a macroscopic crack 10 extends in the longitudinal direction, approaching a microscopic crack 12. On reaching the micro crack 12, the macroscopic crack 10 is partially blunted, and any further propagation must take place in the longitudinal direction of the micro crack 12, as illustrated in Figure 2b. Further crack growth extensions are blunted by additional micro cracks as illustrated in Figure 2c, the path of macroscopic crack propagation becoming more tortuous with each micro crack. The presence of such a macroscopic crack allows the region around it to become more flexible, so that the stress is offloaded to a stiffer region of the component, thus reducing the stress available to drive the macroscopic crack propagation.

This invention provides a process whereby the above noted crack arrest properties of micro cracks can be employed to advantage in a composite component. By deliberately introducing micro cracks at critical regions of high loading or at likely macroscopic crack initiation sites, and orienting these micro cracks across the main axis of loading, the strength of the component at these critical regions is increased, providing a marked improvement in overall component performance and service life. A discussion of the various ways in which micro cracks may be introduced and oriented in regions of a composite product is given below. This is followed by an explanation of aspects of a design process embodying the invention and, finally, some specific examples of ways in which the invention may be applied to components for use in the aerospace industry.

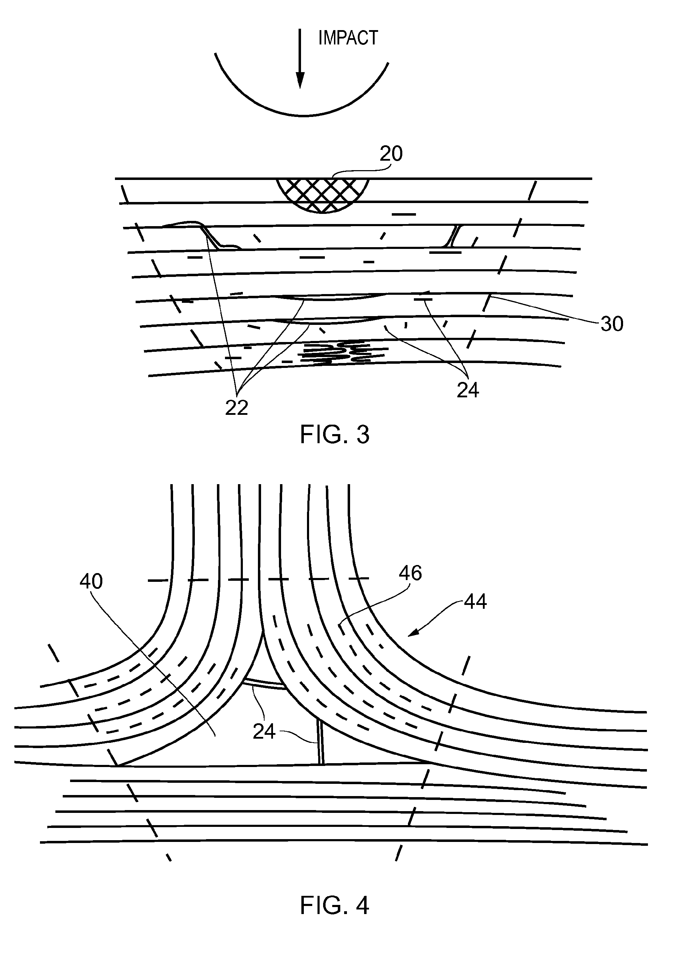

Mechanical processes may be employed to introduce micro cracks into a region of a component. For example, an impactor may be employed in a controlled manner in a region where a high density of micro cracks is required. Alternatively, drilling of holes, application of high amplitude vibrations, thermal cycling and localised static crushing may all be used to create the required plurality of micro cracks. An example of the kind of damage that can be introduced by such mechanical processes is illustrated in Figure 3, which shows impact induced damage on a thin composite panel. Severe resin crush damage is has been inflicted over a localised crush zone 20. A combination of gross failures 22 and significant numbers of micro cracks 24 have been induced over a much larger damage zone 30. The gross failures 22 include delaminations, full ply thickness resin cracks and some fibre breakage. By appropriate use of impact force, or other mechanical means, it is possible to minimise and in some case completely avoid the gross failures 22 while achieving useful levels of micro cracking 24.

Similar micro crack damage may be induced by such processes as laser shock peening, glass bead/shot peening and acoustic methods. Depending on the parameters used (for example laser focus and power, bead size and acoustic focus and amplitude), micro cracks may be induced to different depths within the component. Shielding may be employed to ensure that only specific regions of the component are targeted.

Micro cracks may also be encouraged into certain locations of a composite component through the design process, by targeting specific geometrical features and/or manipulating manufacturing process parameters. The process by which the resin of a composite is cured involves changes in both the temperature and the chemical properties of the resin. These changes lead to internal stresses in the component after processing, which may be relieved by localised micro cracking. The location of highest internal stress, and the direction of the stress gradient, can be manipulated by refinements in the geometrical and internal design of the component, and in the manufacturing process parameters such as the cure temperature, the cure time, the cooling time, and the thermal conductivity and/or active cooling of the mould tooling.

Figure 4 illustrates a T joint, with a typical resin rich deltoid region 40 in the centre of the T, and shows how component design may be employed to introduce micro cracks. Under cure, resin shrinkage causes a change in the volume of the deltoid region 40 leading to formation of cracks 42 in the deltoid region 40. In addition, shrinkage in the deltoid region 40 displaces the plies that wrap over the deltoid in the region abutting the deltoid, illustrated at 44. The effect of this is that the plies no longer lie on the radius that they were designed to lie on, leading to the formation of micro cracks 46 within these plies.

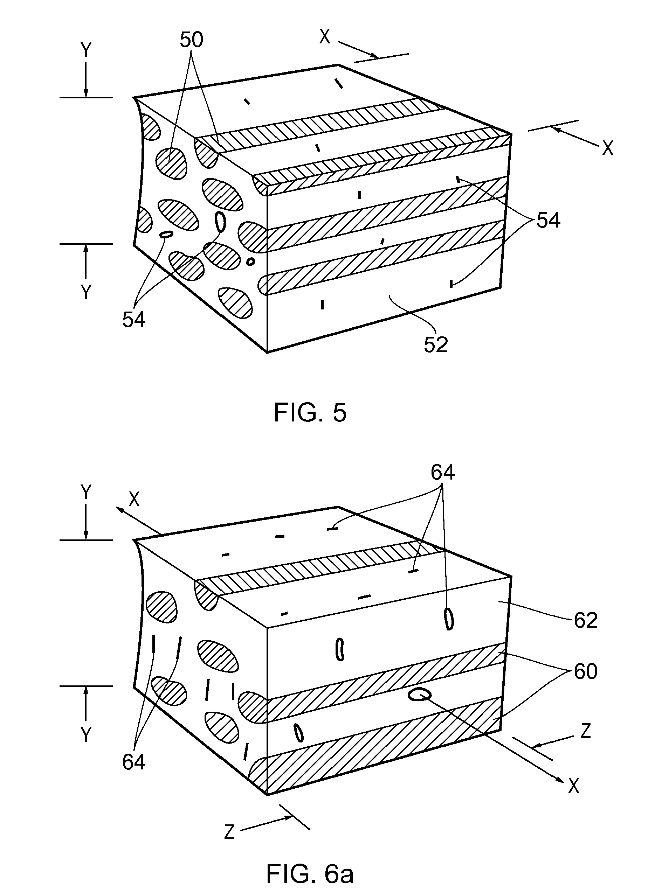

Figure 5 illustrates a small section of a single ply of composite. The fibres 50 of the ply are of significantly higher modulus than the surrounding resin 52, and will therefore tend to retain their shape and dimensions. Under cure shrinkage, the principal directions of shrinkage, illustrated as X and Y, are in the plane perpendicular to the fibre direction. Micro cracks 54 are generated in order to relieve the stresses associated with thermal shrinking. The size and eccentricity of the micro crack cross sections will depend, inter alia, on proximity to a free surface, local ply thickness and heat conduction. The location and direction of the cracks can be manipulated by varying the process parameters of the resin cure and cooling processes.

Pre conditioning loads may also be employed to introduce micro cracks into a composite component. Pre conditioning loads are most commonly applied in components such as metallic discs, where the component is placed in a residual state of stress by preconditioning loads so that when it is used at design loading levels, the peak stresses are lower than before treatment. A different approach is contemplated by the present invention. The absence of significant plastic deformation in a composite component renders the approach used for metallic discs unsuitable. However, correct application of pre conditioning loads can be employed to induce preferential micro cracking in specific locations and orientations.

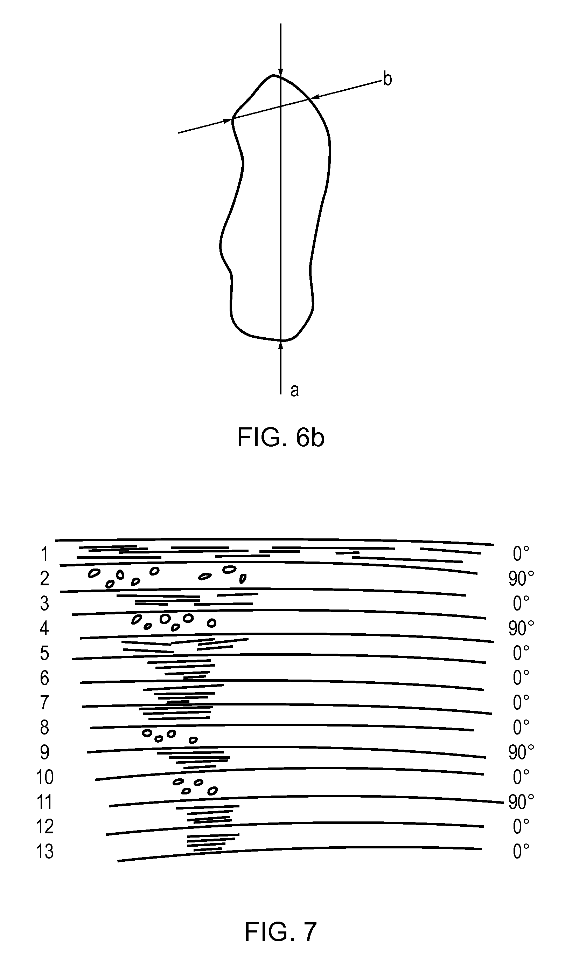

Figure 6a illustrates the application of pre conditioning loads to a small section of a single ply of composite comprising reinforcing fibres 60 embedded in resin 62. Typically, the in service loading will be predominantly in the direction of the fibre reinforcement. The likely direction of macroscopic crack propagation will therefore also be in the direction of the fibre reinforcement, and in order to arrest macroscopic crack propagation, micro cracks oriented perpendicular to the fibre direction are required. Pre conditioning loads are applied in the direction X, perpendicular to the fibre direction as illustrated in Figure 6a. These loads will result in micro cracks 64 being generated in a plane normal to the loading direction. This plane includes directions Y and Z. The reinforcing fibres 60 are stiff compared to the resin 62, meaning that Poisson shrinkage will be greater in direction Y, which is perpendicular to both the pre conditioning loading and the reinforcing fibres. This will have the effect of generating micro cracks that are longer in direction Y than in direction X. Such a crack is illustrated in Figure 6b, where the minor axis b corresponds to the fibre direction and the major axis a is perpendicular to the fibre direction.

Choice of ply materials is another way of inducing micro crack generation in a composite product. Selecting individual plies within a stack to be of higher or lower modulus than surrounding materials can induce internal stresses and/or promote micro crack failure in preferential layers and, owing to the fibre orientation, in preferential directions.

There are two main types of fibre in common usage for composite components: carbon and glass. Carbon fibres are generally of higher modulus while glass fibres are more ductile. There are also different types of glass and carbon fibre, enabling a large difference in modulus to be achieved even in, for example, an all carbon lay-up.

In addition to ply material, ply orientation can be employed in the stacking sequence to promote micro cracking. It is generally considered bad practice to "block" several plies together with the same material and orientation as such blocks are prone to cracking. However, according to the present invention, blocked plies can be employed to beneficial effect. Choice of sequence can encourage preferential micro-cracking in certain layers, or avoid a tendency towards micro-cracking in certain layers. Stacking sequence is therefore designed based on the anticipated service stresses and the locations in the component where these would be most significant.

Figure 7 illustrates a stacking sequence where plies 5, 6, 7 and 8, and plies 12 and 13 are blocked together so as to induce preferential micro cracking in desired layers.

While ply blocking can be used to beneficial effect in certain types of components, it should not be employed in curved components, particularly axi-symmetric components such as casings or nose cones. Ply blocking in such components tends to lead to cure shrinkage problems. Without the influence of plies of opposing orientations, there is less strength to maintain the relative dimensions of the component in certain regions.

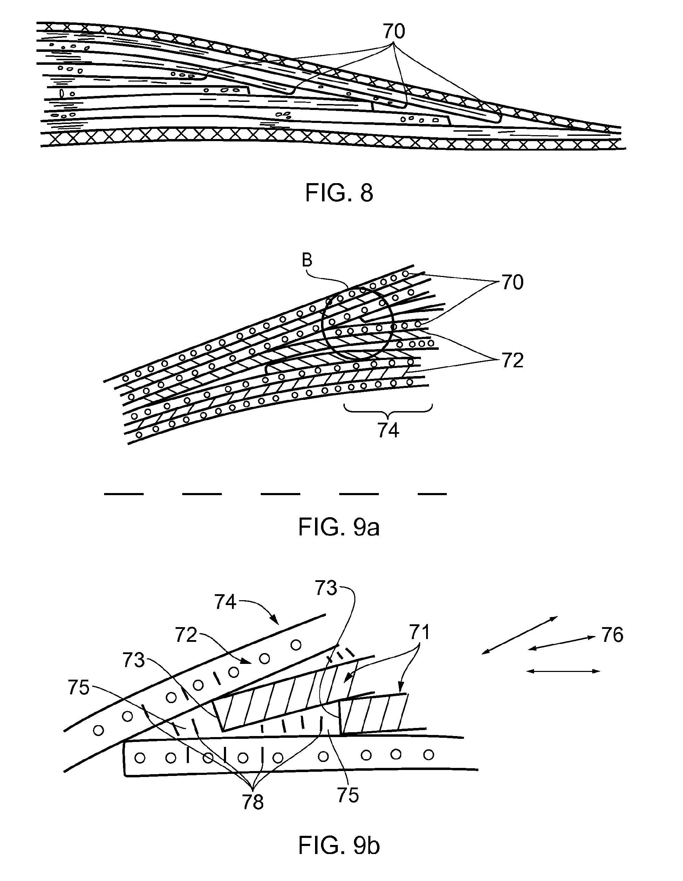

It has already been noted that in service loading patterns can be employed to provide an indication of the likely site and propagation direction of macroscopic cracks, thus determining the desired location and orientation of microscopic cracks. Consideration of internal component geometry can also provide an indication of likely macroscopic crack sites. For example, tapered components or components with varying thickness will have some plies that do not extend over the full area of the component, resulting in features called "drop-offs" where the shorter plies stop. Figure 8 shows a tapered component having a plurality of drop offs, some of which are indicated at 70. Composite components of constant thickness can also have drop-offs, where one ply terminates and a corresponding ply starts at a different point through the component thickness. Drop-offs introduce geometrical discontinuities at the ply scale, which can act as a macroscopic crack initiation feature. It is therefore desirable to concentrate micro cracks in these regions. Such micro cracks could be initiated by mechanical process or during component manufacture as described above.

A design process embodying the present invention can advantageously consider both in service loading and internal component geometry to determine the optimum location and orientation for micro cracks. A thorough study of the component geometry and in service loading will suggest the most likely initiation sites, types and propagation directions for macroscopic cracks. For best effect, microscopic cracks should be introduced in a targeted manner at the sites of likely macroscopic crack initiation. An understanding of the mechanism by which microscopic cracks arrest macroscopic crack propagation, together with the predicted type and propagation directions for the macroscopic cracks, then suggests the optimum orientation for the introduced microscopic cracks. An appropriate method of introduction and orientation may then be selected from those discussed above and employed to generate the desired micro cracks in the finished component.

The following examples illustrate how the invention may be employed in specific components used in the aerospace industry.

Figure 9a illustrates a part of an axi-symmetric component having a thick region. This could be a nose cone or a containment casing. Outside of the aerospace industry this part could be a pipeline or a pressure vessel. The principal direction of loading in the illustrated part of the component is in the hoop direction. Figure 9a shows outer plies (or blocks of plies) 70 with fibres orientated predominantly in the hoop direction, providing the hoop strength required by the component in service. The fibres, or fibre tows, are indicated by circles schematically representing the cross section of each fibre or fibre tow. Other plies 72 are represented by diagonal hatching and could be at +/-45 degrees, or 90 degrees (or other angles) to the hoop direction. It will be appreciated that Figure 9a is a schematic illustration; in practice the component lay-up would be far more complicated.

The region of the component shown is in the form of a conical wall, with the wall thickness increasing towards the right of the Figure resulting in a thick region 74. The thickness variation is achieved by introducing additional plies 71 (Figure 9b) which terminate at drop offs 73, leading to resin rich regions 75. The thick region 74 is prone to cure shrinkage issues, leading to high residual through-thickness stresses, which tend to cause delamination in the thick region. It is desirable to prevent such delamination for the following reasons: i) delamination could lead to the component splitting into concentric pieces, (ii) good connection between layers helps to distribute hoop stresses into the hoop fibre plies (i.e. the fibres oriented in the hoop direction), and (iii) delamination would interfere with the load distribution in the axial direction. Although strength in the axial direction may in many applications be a lesser requirement than strength in the hoop direction, significant axial strength may be required in pressure vessel and containment casing applications as well as for a spinning nose cone, in which centrifugal forces will have a component axially along the cone. For such applications, the load distribution in both axial and hoop directions is important.

Figure 9b shows an enlargement of a section of the thick region illustrated as B on Figure 9a. Figure 9b shows enlargements of the features illustrated in Figure 9a and also illustrates the location and orientation of micro cracks 78 that have been introduced into a predetermined, localised region of the component.

Under outward radial loading, the component would experience increased through thickness tension. The loading would be opposed by the hoop stiffness of the component, but there would be a conflict between adjacent concentric layers having different fibre orientation, and hence different stiffness. Such conflict would lead to initiation of delamination at the interface between plies, particularly at the resin rich regions 75 around the ply drop offs 73. The delamination would tend to propagate along the ply boundaries, both circumferentially and axially. The direction of likely failure is illustrated at 76 on Figure 9b.

The micro cracks 78 are oriented perpendicular to the axial direction, they are localised circumferentially and extend predominantly radially. Delaminations developing in the resin rich regions 73 would be diverted by the micro cracks 78 into the radial direction. Radial stresses at the redirected crack tip would not likely be sufficient to propagate the crack and crack growth would therefore be arrested by the micro cracks 78. Micro cracks 78 are also present in the hoop layers 72. Delaminations encountering, or approaching these micro cracks are directed away from the ply boundaries and into the body of the ply 72. As with redirected cracks in the resin, the new crack tips in the body of the plies would not experience sufficient radial stress for crack propagation and crack growth (delamination) would therefore be arrested by the micro cracks.

Micro cracks in the required orientation and locations can be introduced into the component by applying an axial compressive load to the component during the manufacturing cure cycle. The residual stresses caused by resin shrinkage are released through the formation of micro cracks in the resin rich regions. The additional residual stresses caused by the removal of applied axial compressive loading will encourage those micro-cracks to form in planes perpendicular to the axial direction. The size of the micro-cracks can be adjusted by varying the amount of compressive axial loading and the points in the cure cycle at which it is applied and removed. Multiple applications of axial compressive loading during cure may be worthwhile. Additionally, radial loading, which may be generated by rotating the component in the mould, would give a radial component to the residual stress, and at higher diameters would lead to micro-cracks which are slightly inclined, so that they are near perpendicular to the planes of the more inclined plies.

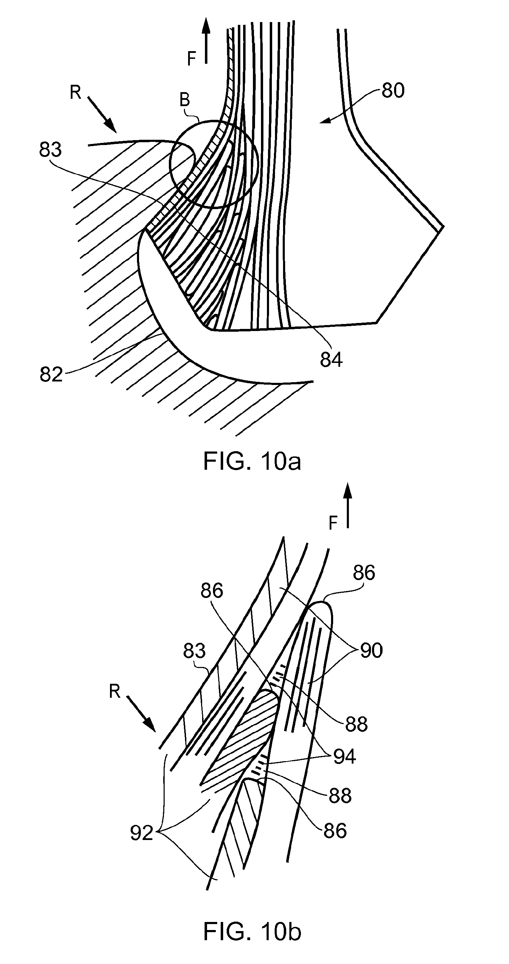

Figure 10a shows a typical blade root configuration for an aerofoil component such as a compressor or fan. The root 80 is dove tailed and fits into a corresponding disc slot 82. The flank 83 of the root is angled and rests against the inclined surface of the upper part 84 of the disc slot 82. In use, the blade rotates and is therefore subject to centripetal loading that acts to pull the blade root 80 out of the slot 82 (arrow F on Figure 10a). The reaction to this load is provided by the slot 82 and flank 83 (arrow R on Figure 10a), which leads to a pressure loading on the flank 83, and potentially to sliding under friction between these surfaces.

The flared nature of the root 80 necessitates a number of ply drop offs 86 which are generally staggered, rather than formed by wedges. This is illustrated in schematic form in Figure 10a, although in practice there would be several hundred plies rather than the 40 or so implied by the Figure. The ply drop offs 86 leave resin rich regions 88.

Figure 10b shows an enlargement of the region of the root flank 83 indicated as B in Figure 10a. The hatched lines in the Figure indicate the orientation of the plies; plies 90 having hatched lines parallel with the ply boundaries are assumed to be orientated in the blade root-to-tip direction. Plies 92 having diagonal hatching are oriented at +/-45 degrees with respect to plies 90. Around any resin rich region 88 there will be plies and ply ends with various combinations of orientations.

When designing the ply stack and orientation sequence in the blade root, it is essential to minimise the propensity for initiation of delamination in plies near to the edge of bedding. Delamination tends to initiate at the ply drop offs and is driven by the shear stress that develops in the flared region of the root 80 as a result of the displacement between the mid-blade applied centripetal loading F, and the two sided flange reaction constraint R. It is known that the compressive loading on the flank acts to suppress delamination, and the flank angle can be optimised to provide an appropriate level of compressive stress. It is also known to choose the stack sequence such that the ply drop-offs are located in an area with good levels of compressive stress protection.

According to the invention, additional protection against delamination failure in the critical regions of ply drops and other resin rich regions is provided by the introduction of micro cracks. Figure 10b shows micro cracks 94 in the resin rich regions 88, which are oriented in the plane generally perpendicular to the blade root-to-tip direction. These cracks will tend to blunt incipient delamination, as explained above with reference to Figures 9a and 9b, and provide additional strength in the root.

Additional strength allows the blade root to be smaller, which may be critical in terms of the number of composite blades that can be fitted in a disc. This number is limited for composite blades by the necessity of having a relatively shallow flank angle compared with a metallic blade. Another benefit of increased strength is that the number of plies can be reduced, simplifying the manufacture process and reducing cost.

In this example, compressive loading in the blade root-to-tip direction applied during the cure cycle would introduce micro cracks at the desired locations and orientations. Alternatively, as the regions where the micro-cracks are needed are not too deep into the flank, mechanical techniques such as glass bead peening and acoustic techniques could also be applied.

## Claims

1. A process for manufacturing a layered composite component which comprises at least one ply of reinforcing fibres embedded in a resin matrix, the process comprising introducing a plurality of micro cracks into the resin matrix into a predetermined region of the component.

2. A process as claimed in claim 1, wherein the predetermined region is a region of the component that is subjected to impact loading when in use.

3. A process as claimed in claim 1 of claim 2, wherein the predetermined region is a localised region subject to impact in use and a site of macroscopic crack initiation.

4. A process as claimed in claim 4, wherein the predetermined region further comprises internal component features that act as macroscopic crack initiators.

5. A process as claimed in any one of claims 2, wherein introducing the plurality of micro cracks comprises orienting the micro cracks to extend perpendicular to the direction of the loading to which the component will be subjected when in use.

6. A process as claimed in any preceding claim, wherein the component comprises at least one ply drop off and at least some of the plurality of micro cracks are introduced into the resin adjacent the drop off location.

7. A process as claimed in any one of the preceding claims, wherein the plurality of micro cracks is introduced by a mechanical process selected from the group comprising impacting, hole drilling, application of high amplitude vibrations, thermal cycling and localised static crushing.

8. A process as claimed in any one of claims 1 to 6, wherein the plurality of micro cracks is introduced through the application of a preconditioning load.

9. A process as claimed in claim 8, wherein the direction of a selected loading to which the component will be subjected when in use is determined and the preconditioning load is applied in a direction perpendicular to the direction of the selected loading.

10. A process as claimed in any one of claims 1 to 6, wherein the plurality of micro cracks is introduced through manipulation of a manufacturing process parameter selected from the group comprising cure temperature, cure time, cooling time, thermal conductivity of mould tooling, active cooling of mould tooling and application of loading during curing.

11. A process as claimed in any one of claims 1 to 6, wherein the plurality of micro cracks is introduced through selection of material properties for adjacent plies.

12. A process as claimed in any one of claims 1 to 6, wherein the plurality of micro cracks is introduced by blocking several plies having the same material and fibre orientation together in a stacking sequence.

13. A layered composite component comprising a plurality of micro cracks in a predetermined region of the component.
